# EUROPEAN PATENT APPLICATION

(11) **EP 4 557 181 A1**
(43) Date of publication of application: **21.05.2025**
(21) Application number: 23306985.5
(22) Date of filing: 16.11.2023
(51) Int. Cl.: G06N 10/60, G06N 10/40

(54) **PROCESSING QUANTUM JOBS FOR A QUANTUM COMPUTER**

(71) Applicant: Pasqal S.A.S., 91300 Massy (FR)
(72) Inventor: BEJI, Mourad, 91300 Massy (FR); MOREAU, Matthieu, 91300 Massy (FR)
(74) Representative: De Vries & Metman

(57) **Abstract**

Methods and systems for processing quantum jobs by a hybrid computing system comprising a classical computer system and one or more atomic qubit-based quantum processing units (QPUs), wherein the method may comprise receiving or determining one or more batches of quantum jobs by the classical computer system, each quantum job being associated with register layout information defining a layout of a quantum register for execution of the quantum job, each batch being associated with trap layout information defining a layout of an electromagnetic trap for trapping atomic qubits, the trap layout of a batch being defined such that register layouts associated with jobs of the batch can be mapped onto the trap layout; selecting a batch of quantum jobs from the one or more batches of quantum jobs and configuring a first trap for a first QPU of the one or more QPUs based on trap layout information associated with the selected batch; and, executing the selected batch of quantum jobs using the first QPU.

## Description

### Technical field

The disclosure relates to processing, including scheduling, quantum jobs for a quantum computer, and in particular, though not exclusively, to methods and systems for scheduling quantum jobs for a quantum computer comprising one or more quantum processing units having a reconfigurable quantum register and a computer program product for executing such methods.

### Background

Currently full stack quantum computers are being developed for enabling executing quantum algorithms for providing solutions to problems that are hard to compute classically. The execution of quantum algorithms may be executed in parallel on multiple quantum computing units (QPUs) and offered as a network-based services, e.g. a cloud-computing service. Such network-based services allow efficient access by multiple user to quantum hardware and quantum emulators for emulating quantum hardware. In fact various developers of quantum computers allow users to program quantum algorithms on a terminal and then send such quantum program as a quantum job (in short a job) to a quantum system for execution. A scheduler may be configured to assign jobs to the QPUs for execution. Since quantum hardware resources are scarce, efficient scheduling is desired.

Processing such jobs based on a naive queue-based scheduling policy is highly inefficient. Time slot-based reservation is always possible, but then one relies on the user to send the jobs in the right order to the device. Resource management for cloud-based quatum computers is known from the article by Ravi et al, Adaptive job and resource management for the growing quantum cloud, arXiv:2203.13260 24 March 2022. The authors propose a scheduling scheme wherein a quantum circuit to be executed as a job is compiled and a QPU is selected based on correlating features extracted from the quantum circuit with the fidelity of the different QPUs in the cloud. Additionally, at predetermined time intervals, the qubits of the different QPUs need to be (re)calibrated to ensure predictable behaviour of the qubits in time. These intervals for calibration are referred to as calibration cycles. The calibration of the different QPUs is distributed in time to ensure that there is a QPU available for executing a job within a calibration cycle.

The proposed scheduling scheme is mainly based on analysis of the quantum circuits that are executed by QPUs which have fixed, pre-determined quantum register layouts that are implemented based on - mainly - superconducting qubits. These schemes are not, or at least less, suitable for scheduling jobs using QPUs that have reconfigurable quantum register layout, such as QPUs that are based on trapped atomic qubits. QPUs with a reconfigurable quantum register allow users to define different quantum register layouts for different runs. This way, for example, a user can tune a quantum register layout to the problem to be solved as for example described in the article by Henriet et al., "Quantum computing with neutral atoms", Quantum 4, 327 (2020).

Hence, from the above it follows that there is a need in the art for improved methods and systems for scheduling jobs on one or more quantum computing units.

### Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments in this disclosure relate to a method for processing, including e.g. scheduling, quantum jobs by a hybrid computing system comprising a classical computer system and one or more atomic qubit-based quantum processing units (QPUs). In an embodiment, the method may include at least one of the steps of: receiving or determining one or more batches of quantum jobs by the classical computer system, each quantum job being associated with register layout information defining a layout of a quantum register for execution of the quantum job, each batch being associated with trap layout information defining a layout of an electromagnetic trap for trapping atomic qubits, the trap layout of a batch being defined such that register layouts associated with jobs of the batch can be mapped onto the trap layout; selecting a batch of quantum jobs from the one or more batches of quantum jobs and configuring a first trap for a first QPU of the one or more QPUs based on trap layout information associated with the selected batch; and, executing the selected batch of quantum jobs using the first QPU.

Hence, information on the layout of the quantum register that is needed for executing a job on a QPU that has a reconfigurable quantum register, such as a quantum processing unit (QPU) based on electromagnetically trapped atomic qubits, e.g. neutral atoms, is leveraged to group jobs together in batches. Information on the layout of the quantum register may be explicitly or implicity part of the job. In some embodidments, register layout information may be explicitly added as metadata to a job description. In other embodiments, register layout information may be implicitly present in a job description. In some embodiment, the register layout information may be derivable from the job description. For example, in graph problems, a graph may be directly translated into a particular layout of atomic qubits, wherein a vertex of a graph may be represented by an atomic qubit, e.g. neutral atom, of a quantum register. Hence, in this case, the graph may be used as register layout information to group jobs that deal with the same graph problem together as a batch.

The jobs are batched based on the register layout information such that the jobs in the batch can be mapped on the layout of an electromagnetic trap that is used for trapping the atomic qubits in a particular geometrical arrangement. Hence, each batch of jobs is associated with one particular trap layout so that the batched jobs can be executed using a single trap layout which may be formed by calibrating the trap layout towards a desired target trap layout in an iterative way. This way, resources associated with the formation and calibration of the layout of the trap, which is a computationally expensive process, can be efficiently managed.

In an embodiment, the register layout information may include register coordinates defining the positons of atomic qubits of a quantum register in a QPU. In another embodiment, the trap layout information may comprise trap coordinates defining the positions of traps of an electro-magnetic trap structure in a QPU for trapping atomic qubits.

In an embodment, determining one or more sets of quantum jobs may include: receiving a plurality of quantum jobs; and, determining the one or more batches of quantum jobs and trap layout information for each the one or more batches based on the register layout information of each of the plurality of quantum jobs.

In an embodiment, each quantum job of the selected batch of quantum jobs may have the same quantum register layout. In a further embodiment, the register coordinates defining the positons of atomic qubits of a quantum register of the selected batch of quantum jobs may match the trap coordinates defining the positions of traps of an electro-magnetic trap structure.

In an embodiment, each quantum job of the selected batch of quantum jobs may have a layout that can be mapped on part of the layout of the trap layout. In a further embodiment, the register coordinates defining the positons of atomic qubits of a quantum register of the selected batch of quantum jobs may match a subset of the trap coordinates defining the positions of traps of an electro-magnetic trap structure.

In an embodiment, a first quantum job of the selected batch of quantum jobs may have a register layout that can be mapped on part of the layout of a second quantum job of the selected batch. In a further embodiment, the register coordinates defining the positons of atomic qubits of a quantum register of the selected quantum job may form a subset of the register coordinates defining the positons of atomic qubits of a quantum register of the second quantum job

In an embodiment, the classical computer system may receive or determine a plurality of batches of quantum jobs.

In an embodiment, the method may further include: selecting a second batch of quantum jobs from the plurality of batches of quantum jobs and configuring a second trap for a second QPU of the one or more QPUs based on trap layout information associated with the second batch.

In an embodiment, the method may further include: receiving or determining similarity metrics between the layout of the first trap and the layout of further traps associated with further batches from the plurality of batches, the similarity metric being indicative of the similarity between two trap layouts; executing at least part of the batches on the first QPU based on the similarity metrics.

In an embodiment, the executing of the at least part of the batches on the first QPU may be in an order determined based on the similarity metrics.

In an embodiment, the executing at least part of the batches on the first QPU may comprise: selecting a further batch from the plurality of batches based on the similarilty metrics and configuring the first trap based on the trap layout information of the further selected batch; and, executing the further selected batch of quantum jobs using the first QPU.

In an embodiment, a quantum job may be associated with information for executing a quantum algorithm on a quantum register.

In an embodiment, the information may include operations representing execution of the quantum algoritm, for example, qubit operations defining a quantum circuit; qubit operations defining a quantum annealing or analog computing algorithm and/or a sequence of pulses to be applied to atomic qubits of the quantum register.

In an embodiment, the atomic qubit-based quantum processing units (QPUs) may be neural atom based QPUs. In an embodiment, the electromagnetic trap may be an optical trap generated by an optical system including one or more spatial light modulators.

In an embodiment, the hybrid computing system may be a network-based computing system. In an embodiment, the hybrid computing system may be classical computer system including a network-based classical server system or cloud system configured to communicate with one or more client devices.

In a further aspect, the embodiments may relate to a hybrid computing system for processing quantum jobs.

In an embodiment, the hybrid computing system may include a classical computer system, and one or more atomic qubit-based quantum processing units (QPUs) connected to the classical computer system.

In an embodiment, the hybrid computing system may be configured to perform the steps of: receiving or determining one or more batches of quantum jobs by the classical computer system, each quantum job being associated with register layout information defining a layout of a quantum register for execution of the quantum job, each batch being associated with trap layout information defining a layout of an electromagnetic trap for trapping atomic qubits, the trap layout of a batch being defined such that register layouts associated with jobs of the batch can be mapped onto the trap layout; selecting a batch of quantum jobs from the one or more batches of quantum jobs and configuring a first trap for a first QPU of the one or more QPUs based on trap layout information associated with the selected batch; and, executing the selected batch of quantum jobs using the first QPU.

In an embodiment, the hybrid computing system may be a network-based hybrid computing system. In an embodiment, the network-based hybrid computing system may comprise a classical network-based server system or a cloud system.

In further embodiment, the hybrid computing system may be further configured to perform any of the steps as described with reference to the embodiments in this disclosure.

In a further aspect, the embodiments in this this disclosure may relate to a client device configured to communicate with a hybrid computing system for processing quantum jobs as described with reference to the embodiments in this disclosure. In an embodiment, the hybrid computing system comprising a classical computer system and one or more atomic qubit-based quantum processing units (QPUs).

In an embodiment, the client device may be configured to: receiving a plurality of quantum jobs, e.g. via a user interface, each quantum job being associated with register layout information defining a layout of a quantum register for one of the one or more QPUs for execution of the quantum job; determining one or more batches of quantum jobs and trap layout information for each the one or more batches based on the register layout information of each of the plurality of quantum jobs, trap layout information defining a layout of an electromagnetic trap for trapping atomic qubits, the trap layout of a batch being defined such that register layouts associated with jobs of the batch can be mapped onto the trap layout; and, transmitting the one or more batches and the associated trap layout information to the hybrid computing system for processing the one or more batches based on the trap layout information.

In an embodiment, the client device may be further configured to: selecting a first batch associated with a first trap layout from the plurality of batches and determining similarity metrics between the layout of the first trap and the layout of further traps associated with further batches from the plurality of batches, the similarity metric being indicative of the similarity between two trap layouts; and, optionally, determining an order of execution of the plurality of batches; and, transmitting the similarity metrics and/or the order of execution of the plurality of batches to the hybrid computing system for processing the one or more batches based.

The invention may also relate to a computer program or suite of computer programs comprising at least one software code portion, the software code portion, when run on a hybrid computing system comprising a classical computer system and one or more atomic qubit-based quantum processing units (QPUs), being configured for executing the method steps according as described with reference to the embodiments.

### Brief Description of the drawings

**Fig. 1** depicts a schematic of a system for processing quantum jobs;
**Fig. 2** illustrates an example of scheduling quantum jobs for a quantum computer;
**Fig. 3** depicts a method of scheduling quantum jobs for a quantum computer according to an embodiment;
**Fig. 4A** and **4B** depict method for processing quantum jobs for a quantum computer according to various embodiments;
**Fig. 5** illustrates a system for processing quantum jobs for a quantum computer according to an embodiment;
**Fig. 6** depicts an example of quantum software program which is structured for processing quantum jobs using a plurality of quantum processing units;
**Fig. 7A** and **7B** depict examples of different optical traps layouts of a QPU;
**Fig. 8A-8C** show examples of mapping a desired quantum register layout onto a trap layout according to en embodiment;
**Fig. 9A** and **9B** illustrate examples for creating a trap layout based on two or more known trap layouts according to an embodiment;
**Fig. 10** illustrates a schedule for efficiently processing quantum jobs according to another embodiment;
**Fig. 11** depicts a hybrid computer system comprising a classical computer system and a quantum processor system;
**Fig. 12** depicts a schematic of a quantum processing unit comprising atomic qubits;
**Fig. 13A-13D** illustrate quantum levels of a neutral atom which can be controlled using pulses;
**Fig. 14** depicts sequences of pulses representing part of a quantum algorithm.

### Description of the embodiments

The embodiments in this disclosure relate methods and system for batch based scheduling of computational tasks that need to be performed on one or more quantum processing units which have a reconfigurable quantum register layout. The computational task may be defined as a software program that is executed on a QPU comprising a reconfigurable quantum register layout. A quantum register may define a spatial arrangement of atomic qubits, e.g. neutral atoms that are configured as qubits. The spatial arrangement may be achieved by trapping the atomic qubits in an optical trap formed by a structured light field. Changing the geometry of the optical trap will change the layout of the atomic qubits and thus the layout of the quantum register. This allows users to tune the layout of quantum register of a QPU to the problem to be solved. Alternatively and/or in addition it allows defining different quantum register layouts for different runs on a QPU.

Hence, a reconfigurable quantum register is a useful feature for many applications in quantum computing, allowing adaptation of the register geometry depending on the task at hand. Some embodiments relate to implementation of quantum machine learning methods on graph structured data or the resolution of Quadratic Unconstrained Binary Optimization (QUBO) problems. In quantum machine learning methods, one needs to apply the exact same sequence to many different qubit registers. In QUBO problems, the layout of the register is tuned to the problem to be solved. In both cases, the layout of the register, in particular the layout of the atomic qubits in the optical trap, and the associated trap layout, are important parameters that can be tuned by the user or a program and represent a way of encoding some parameters of the problem into the quantum program to be executed by a QPU.

Typically, a trap layout may be generated by controlling an optical system including one or more spatial light modulators (SLMs) for creating a specific optical trap layout. However, implementing and calibrating a novel geometry for the optical trap by changing the phase pattern on the SLM can take a long time (up to an hour). In comparison, a job with a high number of runs (e.g. a 1000 runs) takes in the order of minutes. This difference between implementing a novel trap geomertry and execution of a job using such novel trap geometry is mainly due to the calibration process that is needed to realize an accurate trap layout: after the calculation of the desired phase pattern and its implementation, one needs to equalize and homogenize the traps. Calibration of the traps is needed so that traps can be generated repetitively in a robust and homogeneous way is typically performed in an interative way therefore requiring a long calibration time. These long calibration times for modifying the trap layout or for creating a completely new trap layout can be be highly detrimental for the implementation of procedures requiring tens or hundreds of different register layouts. In addition, moving away from a first register layout (based on e.g. a first SLM pattern) to another second register layout (based on a second SLM pattern) and coming back to the first register layout later can introduce a hysteresis effect which may cause inaccuracies in the the trap layout.

In this disclosure the term calibration refers to the calibration process that is needed to implement a new layout of a quantum register on a QPU. This calibration process typically includes iteratively controlling an optical system to generate an optical trap that has a certain layout. The calibration process may be striggered when a user or a job requests a new layout of a quantum register. The trap layout calibration process needs to be distiguised from other calibration processes, such as qubit calibration processes, that may take place on a quantum computer. Such qubit calibration process is a user-independent calibration of the qubits to make sure the various components of the system (qubits, controls, etc) are working predictable in a nominal way and under a certain error threshold. Calibration of the qubits is executed regulary, typically periodically.

In this disclosure the term "quantum job" or in short "job" is a computational task that need to be executed on a QPU comprising a quantum register comprising atomic qubits. Typically, such computational task can be represented at different levels. For example, at the lowest level the task may be represented in the form of a sequence of pulse signals defined by a user (a program) to be run on a quantum register of a QPU. The sequence of pulse signals representing a quantum algorithm will typically be run multiple times on a register in order to get a statistical representation of the state of the system. Here, the term "a run" refers to one application of the sequence of pulses defining a job to a quantum register of a QPU.

Typically, computational task is represented as a program that needs to be translated (compiled) in a set of operations for controlling a signal processing system to generate the sequant of pulse signals. In an example, the program may be represented by a set of operations defining a quantum circuit including a sequence of gate operations to be applied to atomic qubits. Further, jobs that share some characteristics may be referred to a batch. In the embodiments described in this disclosure, the register layout of a QPU may be used as a parameter characterizing a batch. Often, depending on the task at hand, one needs to change the geometrical layout of the atomic qubits forming the quantum register. This geometrical layout may also be referred to as the quantum register layout or in short the register layout.

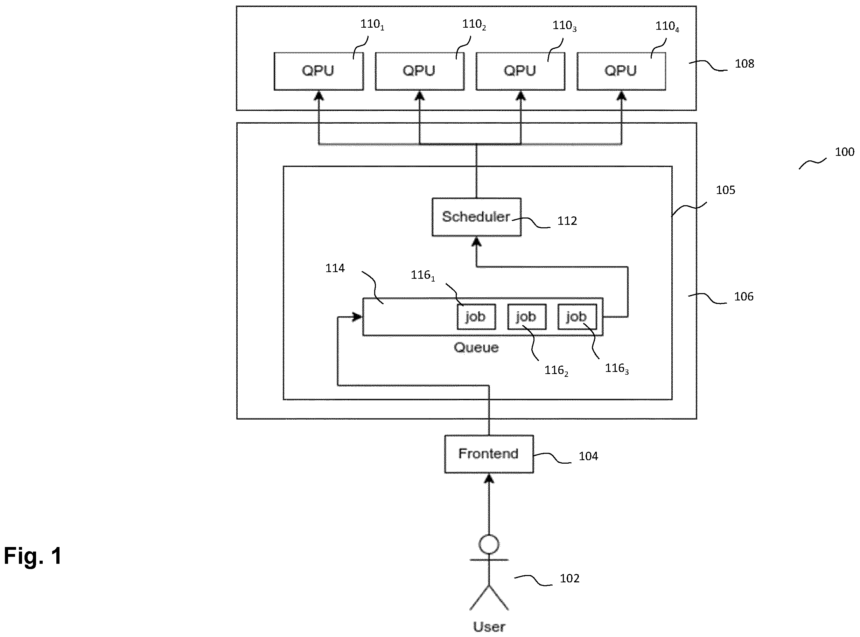

**Fig. 1** depicts a high-level schematic of a system for processing jobs using quantum computer. The quantum computer may comprise one or more quantum processor units (QPUs) that have a configurable quantum register layout. In an embodiment, a QPU may comprise atomic qubits which can be arranged in different geometrical layouts (thereby forming different register layouts). The QPUs **110₁₋₄** may be operated by a classical computer system **106,** wherein the classical computer system and the QPUs may form a hybrid computer system. In some embodiments, the hybrid computer system may be configured as a hybrid computer system, which can remotely accessed by different client devices **104.** Depending on the application, the classical computer system may inlcude one or more classical server systems or cloud system (comprising a plurality of distributed server systems) and one or more client devices, which are configured to access the server or cloud system, either remotely, e.g. via a network, and/or on-site.

A client device, a front end, may be a classical computer which is configured to receive input from a user **102** to define one or more jobs. to be executed on one of the QPUs and send it to the server system. Each job may include information about a quantum algorithm that needs to be executed on one of the QPUs. Further, a software program, e.g. Operating System (OS) **105,** running on the server system may receive instructions from the client device to schedule jobs for execution by one of the one or more QPUs. The OS may be configured to arrange jobs **116₁₋₃** from different client devices in one or more queues **114.** Further, the OS may include a scheduler **112** which is configured to select and execute jobs in the one or more queues such that the resource use of the QPUs is optimized. In some embodiments, each QPU may be associated with a queue so that jobs optimized for a particular QPU can be buffered.

A job may include information about a quantum algorithm. For example, in an embodiment, the information may include instructions for addressing qubits or qudits of a quantum register on a QPU. In another embodiment, the information may include information about the quantum algorithm in the form of one or more digital quantum circuits, wherein each quantum circuits comprises a sequence of gate operations. Alternatively and/or additional, in a further embodiment, the information may include information about pulse sequences associated with a quantum annealing scheme or an analog quantum computing scheme. A job may further include information (metadata) associated with the quantum algorithm, in particular information about the layout (geometry) of the quantum register and/or information about the layout of the trap that includes the qubits forming the quantum register.

The client device may be configured to send a job to the server system, which subsequently adds the job to the job queue. If a QPU is available, a scheduler may assign a job in the queue to the available QPU. The OS may analyze (part of) the job and/or metadata associatd with the job and prepare and optimize execution of the job for a QPU. The preparation and optimization may include determining an (optimal) layout of the qubit register and compile the information in the job, e.g. the instructions for executing a quantum circuit or annealing or analog computation scheme, into a set of (QPU specific) optical and/or microwave pulses for addressing qubits of the QPU. The layout may be translated into a trap layout in which neutral atoms are optically trapped to form an atomic qubit register of a certain geometry. An optical system, e.g. lasers, lenses and one or more spatial light modulators (SLMs), may be used to configure a desired phase pattern for constructing the optical trap. Thereafter, the OS may create a procedure that will run the following steps on the QPU:
i. filling the traps with neutral atoms
ii. (re)arranging the atoms to produce the desired qubit register
iii. applying the set of pulses to the qubits in the qubit register
iv. measuring the qubits
The server system then sends the measured results to the client device.

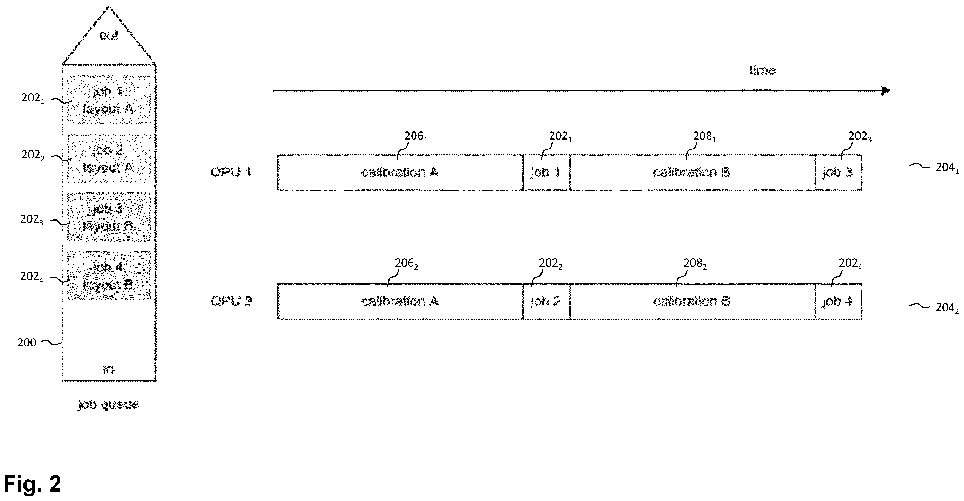

**Fig. 2** illustrates scheduling quantum jobs for a quantum computer. In particular, the figure illustrates an example of scheduling and executing quantum jobs on different QPUs. As shown in this figure, the scheme may include a job queue **200** comprising a plurality of jobs **202₁₋₄,** in this example four jobs. Each job is associated with a particular layout of the quantum register, in this case a first layout A for jobs 1 and 2 and a second layout B for jobs 3 and 4. To prepare a quantum register for such layout, a calibration scheme needs to be executed before a job can be executed for determining a trap layout on which the quantum register layout can be mapped. During operation, the scheduler selects a job from the queue and assigns the execution of the job to a QPU that is available and suitable for that job. In the example of the figure, the jobs may be executed by the scheduler on two QPUs according job schedules **204_{1,2}.** In this case, a first job **202₁** may be sent to the first QPU 1 for execution since it is the first one idle. In that case, a calibration scheme **206₁** is executed in order to prepare the quantum register of QPU 1 according to the first layout A. The second job **202₂** may be sent to the next idle QPU, in this case the second QPU 2, without any other considerations, so that that the calibration process **206₂** for the first layout A is also executed for quantum register of QPU 2. This results in a situation wherein both QPUs are calibrated for register layout A before the jobs (first and second jobs) can be executed. Further jobs, e.g. third job **202₃** and forth job **202_{4,}** may be executed in a similar way so that both QPUs need to be calibrated **208_{1,2}** for register layout B before the jobs (third and forth jobs) can be executed. This example shows that relatively long calibration processes for jobs that have the same (or similar) register layout executed on different QPUs will lead to inefficient use of resources.

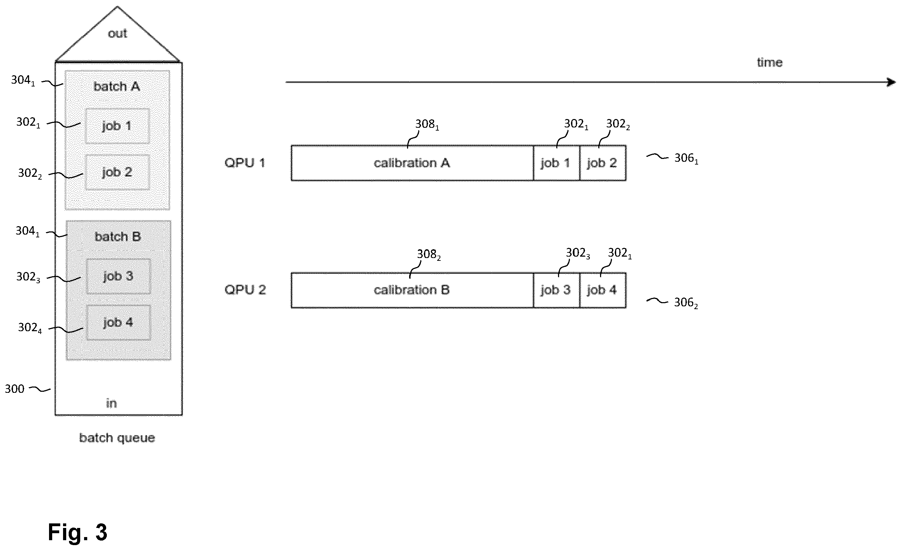

To address this problem the jobs may be processed based on the quantum register layout. This is further illustrated in **Fig. 3****,** which illustrates processing of quantum jobs on a quantum computer according to an embedment. The figure shows a process wherein jobs **302₁₋₄** in a job queue **300** may be organized based on the quantum register layout associated with each of the jobs. For example, in an embodiment, jobs may be organized in batches **304_{1,2},** wherein each batch relates to a particular quantum register layout. The batching may be performed by the user or automatically by e.g. a module of the OS by comparing the layout associated with each of the jobs. This way, the scheduler may assign a batch of jobs associated with a particular register layout (e.g. an identical register layout or a similar register layout) to a QPU. For example, the first batch comprising jobs **302_{1,2}** may be assigned by the scheduler to the first QPU 1, leading to a job schedule **306₁** for QPU 1 wherein it is calibrated using a first calibration scheme **308₁** associated with a first layout A. Thereafter, the two jobs **302_{1,2}** can be executed without the need for changing the layout of the quantum register or, alternatively, with only a small change of the layout in case the layout of the two jobs are similar but not identical. In the same way, the second batch comprising jobs **302_{3,4}** may be assigned by the scheduler to the second QPU 2 resulting in a job schedule **306₂** for QPU 2 wherein it is calibrated using a second calibration scheme **308₂** associated with a second layout B. Thereafter, the two jobs **302_{3,4}** may be executed without the need for changing the layout of the quantum register or, alternatively, with only a small change of the layout in case the layout of the two jobs are similar but not identical.

Hence, the job processing scheme based on the quantum register layout as shown in this figure provides the advantage that after calibrating a QPU for a certain quantum register layout, jobs that are suitable for this register layout can be executed without the need for changing in the layout. Hence, jobs associated using the same or a similar register layout can be executed sequentially on the same QPU without the need to perform a full calibration in which the layout of the quantum register is changed. The direct benefit of the scheme is that it is not necessary to compute and calibrate costly SLM patterns multiple times on multiple QPUs of the pool. This way, the queue of jobs may become a queue of groups of jobs), wherein each group of jobs is associated with the same or similar quantum register layout. Such group may be referred to as a batch and once a batch is assigned to a QPU, that QPU will be reseved for that batch until the jobs associated with the batch are finished. As shown in the figure, each QPU only performs a single layout calibration. This leads very quickly to lower durations per batch/job.

A batch comprising many jobs may take a long time to run. In an embodiment, the register layout may be linked to the particular software application. For example, custom-made register layouts are often used in analog programming and quantum simulation, wherein a certain application may require a specific register layout, which is determined during programming and/or compilation. In that case, a job or a batch may be associated with information, e.g. in the form of metadata, that specifically defines the layout of the quantum register. This information is then used by the OS to perform a specific calibration scheme to achieve the desired layout of the quantum register.

However, other embodiments, e.g. in case of digital programming based on quantum circuits, often one or more register layouts are desired with a high connectivity. Such layouts (e.g. triangular lattices and square lattices with varying spacings) may be pre-calibrated for different QPUs. In that case, a job or a batch may be associated with information, e.g. in the form of metadata, that indicates the type of pre-calibrated layout that is needed so that the OS may select a suitable QPU.

The scheduling methods described in this disclosure may be executed with or without the need for an end user to determine batches. The user may send "orphan" jobs to hybrid computing system and the scheduler is then responsible of batching jobs based on the register layout and assigning them to the devices while minimizing the number of trap layout changes. Similarly, the scheduler (or another module on the server system) may be implemented so that it can correlate layouts of jobs in the queue and form batches of jobs.

The scheduler may allow users to send jobs associated with different register layouts. To efficiently schedule these job based on the register layout, QPUs may provide the list of register layouts (SLM patterns) they have been calibrated for (e.g. as factory settings) to the scheduler and the scheduler may be configured to keep a mapping between the quantum register layouts and the QPUs. This way, when receiving a job with a new register layout, the scheduler can send it to any idle QPU and when receiving a job with a known register layout, the scheduler may send it to one of the QPUs that have been calibrated for that register layout.

In an embodment, the scheduling may be further optimized by deciding to send a job with a known register layout to a QPU that has not been calibrated, if the scheduler notifies that the QPU that is calibrated for this particular layout has too much load. This may be realized for example by monitoring the jobs in the queue and preparing the scheduling decisions in advance and proactively each time when a new job is received. The above described examples show how the scheduling method according to the embodiments can be used to improve the scheduling and thus decrease the effective duration of jobs in a computer environment comprising multiple neutral-atom based QPUs.

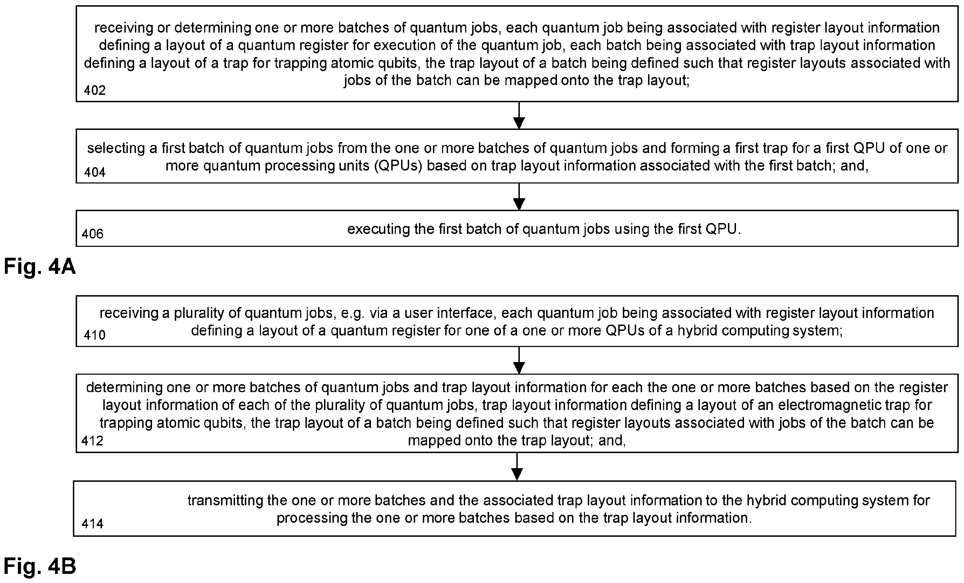

**Fig. 4A** and **4B** depict schematic flow diagrams of a method for processing quantum jobs according to various embodiments. In particular, **Fig. 4A** depicts a method for processing quantum jobs by a hybrid computing system comprising a classical computing system and one or more quantum processing units (QPUs). A QPU may comprise a quantum register with a configurable layout. In an embodiment, the quantum regiter may comprise atomic qubits trapped in an electromagnetic trap. In some embodiments, the hybrid computing system may be a network-based hybrid comprising system that can be accesd by a user via a client device.

The method may start with a step of receiving or determining one or more batches of quantum jobs (step **402**). Each quantum job may be associated with register layout information defining a layout of a quantum register for execution of the quantum job. Further, each batch may be associated with trap layout information defining a layout of a trap for trapping atomic qubits. The trap layout of a batch may be defined such that register layouts associated with jobs of the batch can be mapped onto the trap layout.

A quantum job may be further associated with information regarding a quantum algorithm to be executed on the one or more quantum processing units (QPUs) controlled by a server system. The information regarding a quantum algorithm may include information (either implicit or explicit) regarding a sequence of pulse signals that need to be applied ot the atomic qubits of a QPU.

The method may further include selecting a first batch of quantum jobs from the one or more batches of quantum jobs and forming a first trap for a first QPU of one or more quantum processing units (QPUs) based on trap layout information associated with the first batch (step **404**). In a further step **406,** the first batch of quantum jobs is executed using the first QPU. Hence, the register layout information of quantum jobs may be used to batch quantum jobs which can be executed without to full reconfiguration and calibration of the trap layout (as explained with reference to **Fig. 2** and **3**). This allows resource efficient execution of quantum jobs on one or more QPUs.

The batch-based processing of the quantum jobs as described with reference to the embodiments in this disclosure may be implemented in hybrid computing system of different architectures, including architectures wherein the hybrid computing system is implemented based on a client-server architecutres. Such architectures are particularly suitable for a network-based hybrid computing system, which can be accessed by users via client devices that communicate with a network-based server system or cloud system. In such architecutres, at least part of the functionality of the batch-based processing may be performed at the client device.

An example of a process that can be executed by such client device is depicted in **Fig. 4B****.** As shown in the flow chart, the process may start with the step of receiving a plurality of quantum jobs, e.g. via a user interface, each quantum job being associated with register layout information defining a layout of a quantum register for one of a one or more QPUs of a hybrid computing system, preferably a network-based hybrid computing system (step **410**). Then, the client device may determine one or more batches of quantum jobs and trap layout information for each the one or more batches based on the register layout information of each of the plurality of quantum jobs, wherein the trap layout information defines a layout of an electromagnetic trap for trapping atomic qubits (step **412**). The trap layout for a batch of quantum jobs may be defined such that register layouts associated with jobs of the batch can be mapped onto the trap layout. transmitting the one or more batches and the associated trap layout information to the hybrid computing system for processing the one or more batches based on the trap layout information. Finally, the one or more batches and the associated trap layout information may be transmitted to the hybrid computing system, in particular a server system of the hybrid computing system, for processing the one or more batches based on the trap layout information.

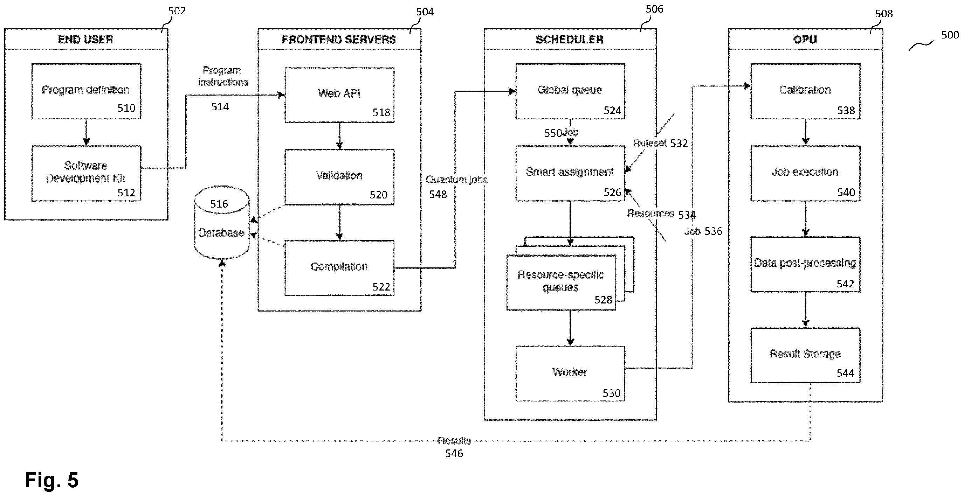

**Fig. 5** illustrates a system for processing quantum jobs according to an embodiment. This system may be a hybrid computing system configured to process quantum jobs as described with reference to **Fig. 3** and **4****.** In some embodiments, the hybrid computing system may be a network-based hybrid computing system which can process, e.g. schedule, quantum jobs for one or more QPUs based on the quantum register layout that is needed for the jobs.

After defining a quantum program **510** that needs to be executed on a QPU in a suitable high-level programming language, a user **502** may use a software development kit (SDK) **512** to construct a list of instructions under a standardized format. These instructions may be sent via a client device to a server **518,** e.g. a web API server, using a suitable protocol, e.g. HTTP or the like. The server may include a validation module to validate **520** and store the instructions into a database **516.** A compiler **522** may be used to compile the instructions into a list of quantum jobs **548.** The jobs **550** are subsequently sent to the scheduler which may add the jobs to a first queue, a global queue **524,** in which jobs are collected that need to be assigned by the scheduler. The scheduler may compute the optimal assignment of the jobs based on a list of available resources **534** (identifying the one or more available QPUs) and according to a set of rules **532.**

Examples of such rules may include batching jobs together when they share the same layout and/or sending batches to QPUs that have already been calibrated with the layout. The ruleset may be defined by the hardware constraints of each QPU (e.g. available channels on the sequence, maximum number of qubits, etc.). For example, some quantum jobs may require characteristics that are not available on all resources (i.e. QPU): e.g. a minimum amount of qubits, a dedicated instrument necessary to run a specific pulse, etc. Rules may also include commercial constraints, e.g. QPUs reserver to certain customers.

This way, the scheduler may evaluate each job and send it to one one or more resource-specfic queues **528** wherein each resource-specific queue is associated with a QPU. A worker module **530** may be configured to retrieve jobs **536,** e.g. sequentially, from each queue and send the jobs to their assigned QPU **508.** When the QPU receives a job, it may run a calibration steps **538** e.g. conventional calibrations steps to prepare the qubits in the quantum register, in some embodiments the calibration may include calibration steps to implement a new quantum register layout. Such calibration is not needed, if the QPU was already calibrated for that register layout. Then, the job may be **540** executed and, optionally, some post-processing analysis algorithms **542** may be executed to compute the results, which may stored **544** in database **516** and sent back to the user.

Hence, as shown in this figure, the scheduler may be configured to determine for each job the resource it should be assigned to as well as the order of execution of jobs and to batch these jobs based on the quantum register layout as described with reference to embodiments in this disclosure. Here, the resources are the QPUs, the jobs are the quantum programs sent by users to run on the QPUs, and the ruleset is defined by the hardware constraints of each QPU (e.g. available channels on the sequence, maximum number of qubits, etc.). The scheduler aims to find a schedule for batched jobs that minimizes the duration to run all the jobs.

The embodiments described in this disclosure batch quantum jobs based on the register layout to optimize the scheduling of quantum jobs for one or more QPUs. In some embodiments, a low-level API and low-level programming framework such as a quantum assembly language (like OpenQASM) may be used by users to define batches of jobs that share the same or a similar register layout.

The hybrid computing system as shown in **Fig. 5** however may also be provided with one or more higher-level APIs that abstract part of the complexity related to quantum physics of the QPUs. In that case, a system of transpilation and/or compilation may be used to transform a high-level representation of a quantum program into a quantum program of low level language for controlling low-level APIs that control the actual hardware components of the QPUs (i.e. the hardware controlling the optical traps and the addressing of the neutral atoms that form a quantum register). A compiler for transforming a quantum program written in a high-level programming language into a quantum program in a low-level programming may be configured to batch jobs according to the register layout, enabling the active gain in processing time for such high-level APIs.

Hence, the concept of batching of quantum jobs based on the layout of a quantum register may not only applied to low-level jobs that were generated from the compilation of high-level programs, but also to high-level quantum programs themselves. The definition of such programs may be deterministically translated in terms of register layout, allowing the scheduler to apply the scheduling policies, including batched-based processing of jobs, to high-level programs directly.

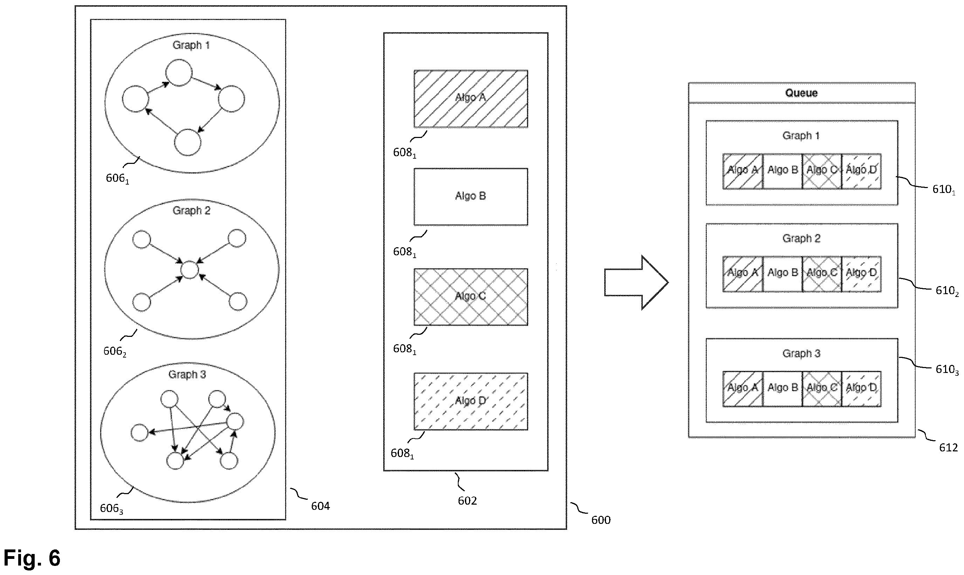

For example, in quantum computing there is special interest in studing specific problems, such as graph problems, that may be mapped on different quantum register layouts. To study properties of different graphs, a set of algorithms may be executed on each of these graphs. For any algorithm the graph would be encoded using a single register layout. **Fig. 6** depicts an example of a high-level quantum software program **600** which is structured for running a set of algorithms **602** on each graph of the set of graphs **604.** In graph problems, the graph is directly translated into a particular layout of neutral atoms (forming the qubits), wherein a vertex of a graph may be represented by an atomic qubit, e.g. neutral atom, of a quantum register. In that case the high-level software can be configured to batch all the algorithms of each graph without prior knowledge of the implementation of the algorithms and the specific layout of the graphs on a QPU. Hence, the high-level programing language may be configured to allow batching of the algoritms (which are executed as jobs on different QPUs) based on the graph layout (which directly translates into a quantum register layout). This way, when executing the quantum program written in a high-level programming language, the queue **612** of the scheduler may include jobs (i.e. the quantum algorithms) which are grouped (batched) in accordance with the graph layout **610₁₋₃.**

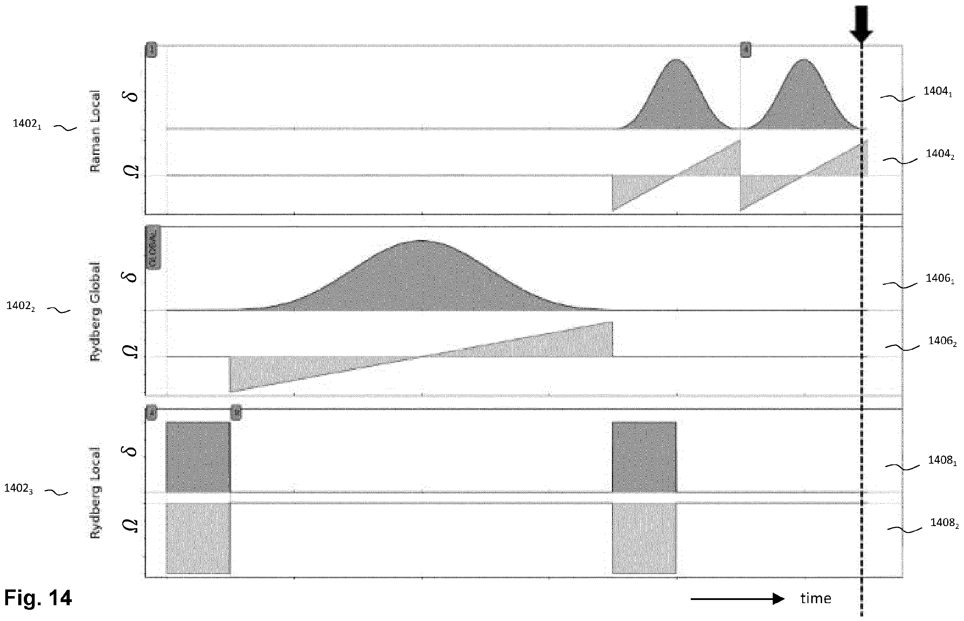

A job referenced in this disclosure implicity or explicity defines a sequence of pulses. Each pulse describes, over a finite duration, the modulation of a channel's output amplitude, detuning and phase, wherein a channel is a component, e.g. a specific pulse signal, that is responsible for driving a given transition of an atomic qubit (e.g. ground-Rydberg transition). While the phase may be constant throughout a pulse, the amplitude and detuning may vary in time and may be described by waveforms, which define these quantities values throughout the pulse. **Fig. 14** provides an example of a sequence of pulses (in time) with three channels which are used to address one or more neutral atoms of the quantum register. The pulses may represent laser pulses and/or microwave pulses of a predetermined wavelength which can be used to manipulate the quantum state of the neutral atoms. Optical pulses may be configured as local pulses to address single or a predetermined number of neutral atoms of the register. Alternatively, optical pulses may be configured as global pulses to address all or a large group of neutal atoms of the quantum register.

A quantum register referenced in this disclosure may define a spatial arrangement of atomic qubits, e.g. neutral atoms that are configured as qubits. In a job description a layout of a quantum register may be defined based on coordinates which define the positions of the atoms in a space. Typically, the spatial arrangement of atomic qubits is implemented using an optical trap structure, i.e. structured light in which the atomic qubits can be trapped. A layout of a quantum register matches a trap layout of a neutral atom based QPU if the positions of the atomic qubits of the quantum register are a subset of the positions of the trap layout. A list of common trap layouts may be defined that cover quantum register layouts that are frequenly used by jobs. Such layouts include triangular and rectangular layouts or any other commonly used layout, wherein it is empfaszied that a layout of a quantum register does not need to be a regular pattern.

In a job description a layout of a quantum register may be defined based on coordinates which define the positions of the atoms in a space. Typically, the spatial arrangement of atomic qubits is implemented using an optical trap structure, i.e. structured light in which the atomic qubits can be trapped. A layout of a quantum register matches a trap layout of a neutral atom based QPU if the positions of the atomic qubits of the quantum register are a subset of the positions of the trap layout. A list of common trap layouts may be defined that cover quantum register layouts that are frequenly used by jobs. Such layouts include triangular and rectangular layouts or any other commonly used layout, wherein it is empfaszied that a layout of a quantum register does not need to be a regular pattern.

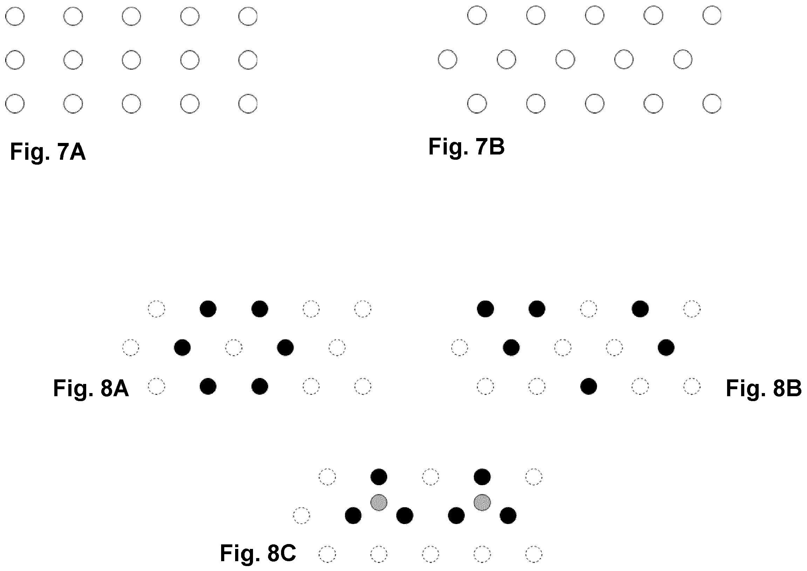

**Fig. 7A** and **7B** show examples of (part of) a trap layout having a square layout and a triangular layout respectively. These layouts may be defined by coordinates or a function which can be used to determine the coordinates. A controller of the QPU may be configured to produce different trap layouts. Some of these trap layouts may be pre-configured, e.g. square or triangular arrangement with different pitches. In that case, the pre-configuration means that calibration schemes for calibrating square and/or triangular optical trap layouts with different pitches were executed in advance (e.g. as a factory setting of a QPU) and the settings associated with these calibrated trap layouts may be stored so that the QPU can use them when needed. Other trap layouts may be specific to the problem to be computed. These trap layouts may be configured (e.g. programmed or set) by a user. The trap layout is used to create a layout of neutral atoms to form a quantum register. Hence, the trap layout should match a layout of neutral atoms that is desired for executing a particular quantum job. In that case, the trap layout and the desired layout of the neutral atoms should match.

**Fig. 8A-8C** show examples of mapping a desired quantum register layout (a desired layout of neutral atoms) onto a trap layout. In particular, **Fig. 8A** and **8B** show examples of layouts of quantum registers that match the triangular layout of the trap layout, wherein black dots show the positions of the neutral atoms of the quantum register that match positions of the trap layout and the dotted circles indicated unused trap positions. These examples show that different quantum register layouts can be realized using the same triangular trap layout. **Fig. 8C** shows an example of a quantum register layout which cannot be realized based on the trap layout. Here, the two grey dots denote the positions of netural atoms which do not match the trap layout.

The calibration of the trap layout of the QPU requires heavy computation and - for complex patterns - may take up to an hour. The settings of a calibrated trap layout may be stored and reused with little cost for later jobs, which use a quantum register layout that matches the trap layout. The most common trap layouts may be be pre-calibrated (pre-configured) to lower the required time to setup different trap patterns for many different jobs. However, it is desired to avoid unnessary switching between different trap layout. Many changes of the configuration of the trap layout has an effect on the stability of the QPU and may affect the life-expectancy of some of its components. Additionaly, switching back to an earlier pre-configured trap layout may introduce a hysteresis effect by which it is not necessarily guaranteed that the traps will still be sufficiently accurate positioned and calibrated. Based on these constrains, it is desired to batch quantum jobs that have a register that matches the trap layout so that the number of calibrations can be minimized.

Embodiments illustrating batching quantum jobs are described in more detail. In an embodiment, quantum jobs with the same quantum register layout (e.g. the same set of coordinates of atomic qubits) may be grouped. In another embodiment, quantum jobs may be grouped so that the group of quantum jobs have quantum register layouts which form a subset of a regular trap layout (as for example illustrated in **Fig. 8A** and **8B**). In yet another embodiment, quantum jobs may be grouped so that one or more jobs have a quantum register layout that form a subset of the layout of another quantum job.

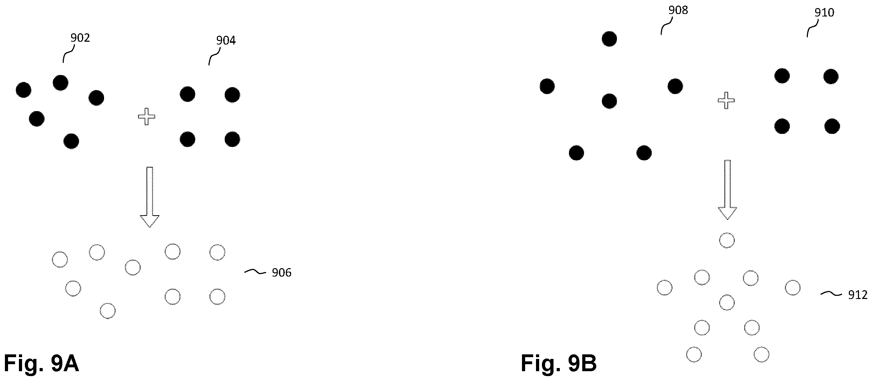

**Fig. 9A** and **9B** illustrate examples for creating a trap layout based on two or more known quantum registers. For example, a juxtaposition of two (or more) quantum registers may be used to form a new trap layout as shown in **Fig. 9A****.** This figure shows a first trap layout associated with a quantum job requiring a first quantum register layout **902** and a second trap layout associated with a quantum job requiring a second quantum register **904** which may be combined to form a combined trap layout **906** which can be used to execute jobs on each one of the quantum registers or jobs that uses all atomes or any subset thereof. In a similar way, in an embodiment, a new trap layout **912** may be created based on a superposition of two (or more) quantum registers, a first register **908** and a second register **910** as shown in **Fig. 9B****.** The sum of the number of atoms has to be smaller than the maximum possible amount of traps in the QPU. The new main constraint for the new trap layout is verification whether the minium distance between two traps in the resulting trap layout is larger than a given distance imposted by the contraints of the hardware. Hence, trap layout may be build based on registers that are associated with jobs to optimize the load. E.g. if a job does not specify a layout and just need to use a given quantum register, multiple jobs can be batched together by constructing such a common trap layout.

The calibration of a trap layout is an iterative process. Hence, in order to significantly speed up the formation of a target trap layout, one may start the computation for the calibration of the target trap layout using a similar trap layout, i.e. a known trap layout which has a layout that is relatively close to the target layout. A similarity measure or a distance measure between two trap layouts may be computed based on the coordinates of the atomic positions. The distance measure may be minimized by iteratively changing (tweaking) the layout to reach the target layout.

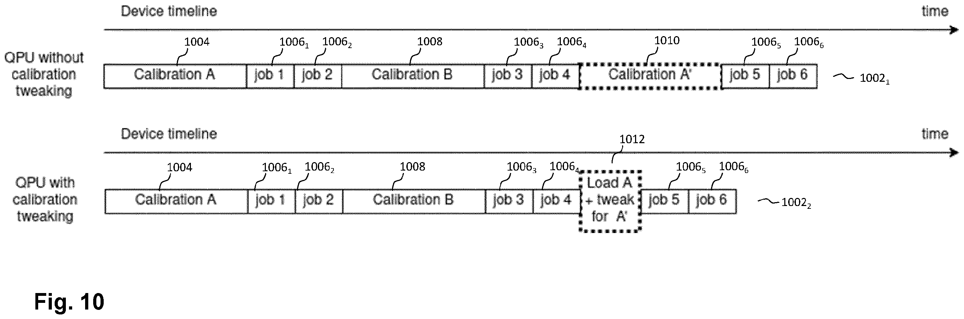

**Fig. 10** illustrates a schedule for efficiently processing quantum jobs according to another embodiment. The figure depicts two job schedules **1002₁** and **1002₂** to illustrate a time gain that can be achieved by using calibration of a target register layout based on an already known (pre-calibrated) layout. In particular, the job schedules **1002_{1,2}** illustrate the execution of three batches, a first batch comprising a first set of jobs **1006_{1,2}** associated with a register layout A **1004,** a second batch comprising a second set of jobs **1006_{1,2}** associated with register layout B **1008** and a third batch comprising a third set of jobs **1006_{1,2}** associated with register layout A' **1010** are executed in time, wherein register layout A' is very similar to the layout of register A. The first job schedule **1002₁** shows execution of the batched jobs as described with reference to **Fig. 3****.** The use of batching jobs based on the register layout already provides a significant gain compared with executing jobs on a simple first to serve basis, wherein the first job in the queue is assigned to the first QPU that is available.

To execute the jobs even more efficiently, stored calibration settings that were computed for quantum register A may be used as a starting point for the calibration of the layout of register A'. This is schematically shown by the second job schedule **1002₂,** wherein in step **1012** of the schedule, calibration setting may be loaded to create a quantum register layout A. Thereafter, quantum register layout A, which is close to the layout A', maybe modified to determine the layout for register A' (the target layout). The target layout is achieved much faster when compared to the situation wherein the calibration process needs to be executed from scratch (as shown by job schedule **1002₁**). Overall this results in a time gain on the execution of all the jobs.

More generally, as illustrated by the schedule explained with reference to **Fig. 10****,** based on knowledge of the calibration algorithm, an heuristic may be defined to estimate a "similarity" or a "distance" between two trap layouts. The similarlity or distance between two trap layout A and B would be close to zero if one could calibrate for B by tweaking calibration A with little time-cost. The similarity or distance would be large if tweaking A to get calibration B would take the same time as computing calibration B from scratch. This mapping based on a similarity or a distance between two trap layouts can be used to compute a score between a trap layout "A" and a set of trap layouts - e.g. the set of pre-calibrated layouts associated with an QPU - by taking the minimum distance between A and each layout of the set.

Given a pool of QPUs with their respective set of pre-calibrated trap layouts and a batch of jobs encoded on trap layout A, the scheduler may compute the similarity or distance of the layout A to the set of trap layouts of each QPU. The QPU with a minimal score is the QPU where the calibration time will be minimal. The scheduler will assign the batch to this QPU. Using this similarity or distance metric, the definition of "hard" batching of jobs - i.e. jobs which share the same trap layout can be batched to run on a QPU - can be extended to "soft" batching - i.e. jobs can be batched if their underlying trap layouts have small distance. This way, batches of jobs can be ordered based on the trap layout that is associated with each of the batches. The order is such that the change in trap layout between subsequent batches is small. This can help further improve the scheduling of jobs on QPU by optimizing the total calibration time required on the QPU to switch from one trap layout to another.

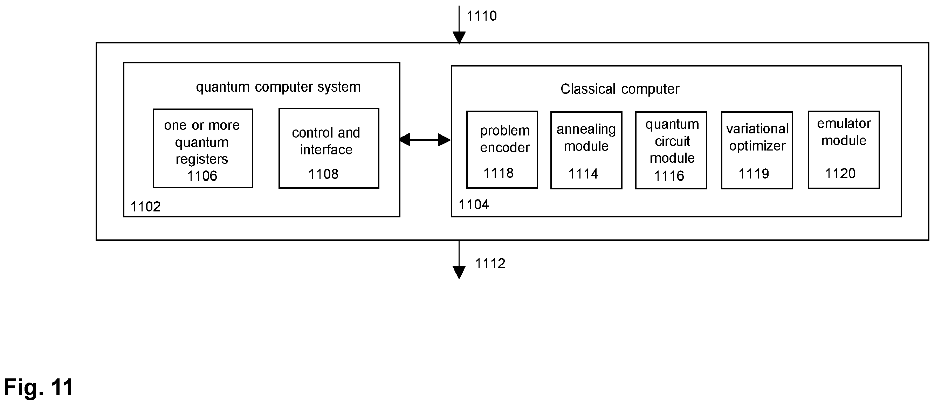

Generally, the schemes described in this disclosure may be executed by a hybrid computer system comprising a classical computer system and a quantum computer system. An example of such hybrid computer system is depicted **in** **Fig. 11****.** Such hybrid computer system may comprise a classical computer system **1104,** in particular a classical servers system, comprising one or more classical processors (CPUs and/or GPUs) and a quantum computing system **1102** comprising quantum hardware, i.e. one or more quantum processing units (QPUs) **1106,** which can be configured as quantum registers as explained with reference to the embodiments. The QPUs may comprise a plurality of interacting quantum elements, e.g. qubits or qudits, that can be controlled by the classical computer system. The qubits may be implemented based on different types of technologies that allow implementation of a reconfigurable quantum register, i.e. a quantum register which has a reconfigurable layout such technologies include QPUs based on trapped atomic qubits, e.g. neutral atoms, or based on trapped ions.

The quantum computer system may be controlled via a controller system **1108** comprising input output (I/O) devices which form an interface between the quantum processor and classical computer. The controller system may include a system for generating control signals for controlling the quantum processing elements. The control signals may include for example pulses, e.g. microwave pulses, voltage pulses and/or optical pulses, for manipulating the qubits, e.g. bringing them in an initial state and manipulating the state of the qubit and/or the interaction (coupling) between two or more qubits. Further, the controller may include a data acquisition system for readout of state of the quantum processing elements. Hence, the data acquisition system may receive an output signal originating from the quantum processor in response to a readout pulse for reading the state of a quantum element. In some embodiments, at least a part of the data acquisition system may be implemented as an chip, e.g. a FPGA or the like.

The classical computing system may include different modules for enabling execution of quantum programs, e.g. quantum jobs. For example, for executing a quantum annnelaing algorithms, the system may include a problem encoder **1118** configured to receive a computational problem such as the protein hydration problem and to encode the problem into a problem Hamiltonian of the quantum processor and an annealing module which is configured to generate control signals for executing the annealing algorithm based on the problem Hamiltonian. The system may further include a quantum circuit module **1116** for executing algorithms that are implemented as a quantum circuit comprising a sequence of single and multi-qubit gate operations. Additionally, in some embodiments, the classical computer may include a variational optimizer module **1119** for executing variational quantum algorithms such as quantum neural networks.

The classical computer may further include an emulator module **1120** for emulating (part of the) quantum dynamics executed by a quantum register with a limited number of qubits classically. The emulator module may include exact solvers like state vector, Schrodinger equation and master equation solvers, for exact emulation of a limited number of qubits. The classical emulator may also include approximate solvers like tensor network algorithms and/or deep neural networks to approximately emulate dynamics of a limited number of qubits.

The problem Hamiltonian may be an Ising-type Hamiltonian or a Rydberg type Hamiltonian based on Pauli operators acting on a k-th qubit of the qubits of the quantum processor. The problem Hamiltonian may also include one or more adjustable parameters which can be controlled by external electromagnetic control signals, e.g. electro-magnetic, optical and/or magnetic fields and/or pulses, which may be used to locally and/or globally adjust the electromagnetic or magnetic environment at one or more qubits. A plurality of such adjustable external control signals may be used to control a single qubit or a part of the plurality of qubits. By adjusting the external control signals, these parameters may be adjusted depending on the computational problem. Encoding the computational problem into the problem Hamiltonian, as performed by the classical computing system, includes determining, from the computational problem, a configuration for the plurality of adjustable parameters. For each of the adjustable parameters may be determined depending on the computational problem.

The controller system may include a data acquisition system configured to measure the states of at least part of the qubits of the quantum processor, wherein the measured information may include at least part of the solution to the problem that is encoded in the problem Hamiltonian. In particular, the classical computer may determine a trial solution to the computational problem based on the measured information, and verify if the trial solution actually is a solution to the computational problem. For NP problems, the verification is a computation which can be carried out in polynomial time, and can typically be easily computed. This process may be repeated until a solution to the computational problem is found.

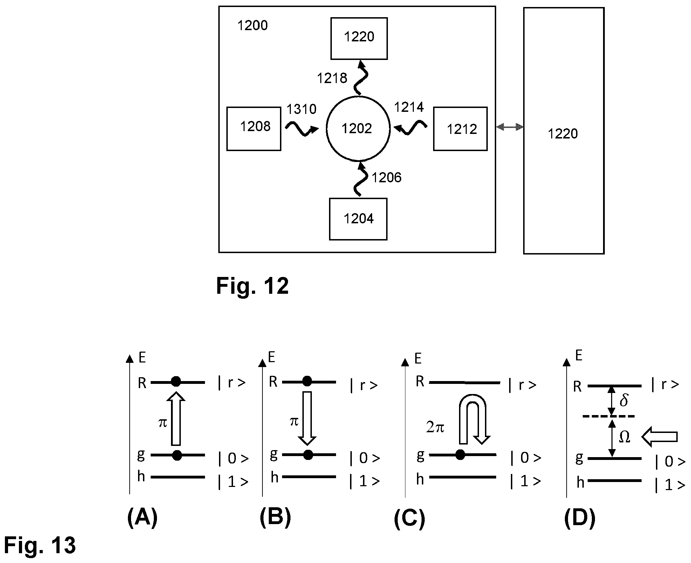

One particular advantageous hybrid computer system for implementing and executing schemes described in this application, is a quantum computer system having QPUs based on configurable layouts of neutral atoms which are trapped in an optical trap (also referred to as a neutral atom register). **Fig. 12** illustrates a high-level schematic of such neutral atom based quantum computing system. In particular, the figure illustrates a neutral atom QPU **1200** which is controlled by a classical computer **1220** and which is configured to execute quantum jobs as described with reference to the embodiments in this application.

The QPU may include a chamber **1202** that accommodates a plurality of neutral atoms. The atoms may be of the same element, and thus are, from a chemical standpoint, identical when no external interactions are imposed upon them. The atoms may be unbound to other atoms in the group, for example, by being in a gaseous matter state. Particular suitable atoms that can be used as qubits and which are suitable for trapping, positioning and atomic-state-manipulating may include (but not limited to) Rubidium or Cesium or Strontium (Alkali, Alkaline Earth, ...). These atoms may be used as qubits, referred to atomic qubits.

To control the QPU to execute operations, it may include different control and readout modules as shown in the figure. In particular, the QPU may include amongst others a trapping system **1204** configured to generate and maintain an optial trap for trapping atoms in a particular spatial arrangement within the chamber (a trap layout), an atom positioner **1208** configured to controllably move one or more trapped atoms from one spatial position to another spatial position, a state controller **1212** configured to generated control pulses to control and manipulate the states of atomic qubits in the optical trap, and a detector **1220** configured to detect and capture optical signals **1218** transmitted by atomic qubits in the optical trap in the chamber. The detector may comprise a camera to image the fluorescence output by the atoms held by the holding system.

The trapping system **1204** may include an optical system which is configured to generated a particular trap layout. In particular, the trapping system may be configured to position (trap) an atom at different positions in the chamber such that they form a predetermined spatial arrangement in which atoms or atomic clusers are isolated from each other if they are in a non-excited state, while atoms or atomic clusers within a certain region may interact if they are in an excited state. Hence, the term `isolate' in this context means that an atom in a non-excited atomic state does not interact with a neighbouring atom. However, if the atoms are stimulated using, for example, an electromagnetic signal such as a laser pulse and/or a mircrowave pulse, they may be brought into an excited state, in which the atoms may interact with each other based on quantum mechanical effects such as (but not limited to) the Rydberg blockade.

The trapping system may be configured to trap one atom at each site so that a spatial arrangement of single atoms is formed wherein each atom forms a multi-level quantum system that can be used as a qubit. In another embodiment, the trapping system may be configured to configured hold multiple atoms, e.g. two or three or a cluster, at each site. Each set of multiple atoms may form a multi-level quantum system that can be configured as a qubit (or a qudit).

The trapping system may be configured to maintain the atoms in their stationary positions using different mechanisms including, but not limited to, magnetically traps and optical traps. The trapping system may be configured to generate a pattern of spatially separated traps using for example arrays of optical tweezers so that a particular spatial arrangement of atoms in the chamber can be realized. The trapping pattern may be an array of regular or irregular spaced traps. The trapping patterns may include 1D, 2D (insofar that the traps in the pattern all align along one plane) or 3D patterns of traps. For example, the trapping system may generate a regular or irregular 3D layout of traps spaced in the X, Y and Z dimensions allowing the formation of one or more 3D quantum registers. The spacing in one spatial dimension may be the same or different to the other spatial dimensions.

The layout of the optical trap which realized by one or more arrays of optical tweezers can be modified by controlling the optical tweezers. The trap layout can be chosen in any arbitrary 1D, 2D or even 3D geometry using tailored holographic methods. Before passing through a focusing lens, the trapping beam is reflected onto a spatial light modulator (SLM) that imprints an adjustable phase pattern on the light. In the focal plane of the lens, the phase modulation gets converted into a desired intensity pattern, thereby creating a spatial distribution of optical traps of a certain layout in which atoms can be trapped. Once the trap layout is defined, users can fill at least some of the traps with cold atoms, e.g. atoms from a cold atom source or reservoir such as a magneto-optical trap (MOT). The trapped atoms can then be rearranged (moved) to specific positions to create a quantum register. This quantum register is then used in a digital circuit or with a set of analog pulses to perform actual quantum computations as for example described in the article by Henriet et al., "Quantum computing with neutral atoms", Quantum 4, 327 (2020).

The trapping system may provide a plurality of trapping sites wherein, when the trapping system is first activated some trapping sites may be filled by one or more atoms whilst other trap sites are vacant. Preferably the trapping system may be configured to generate trapping sites that hold a single atom. The trapping system may use electromagnetic signals **1206,** such as optical trapping beams, e.g. laser beams, to generate the optical traps in the chamber.

The atom positioner **1208** may be configured to controllably move one or more held atoms from one spatial position to another spatial position. For example, in an embodiment, the atom positioner may include one or more optical tweezers configured to use optical signals **1210** to move one or more trapped atoms in one of the trapping sites to another trapping site. Different technologies may be used to manipulate the position of the atoms including, but not limited to, moving the atoms using magnetic signals or electromagnetic signals such as optical signals.

The state controller **1212** may be configured to generate optical pulse signals to control and manipulate the states of atoms in the chamber (in other words it "actuates" the transition between atomic states). The optical pulse signals **1214** may include single or multiple photon signals. Different optical pulse signals may be output by the atomic state actuator including optical pulse signals at different wavelengths. Each wavelength may correspond to (i.e., be resonant with) a different atomic transition. Typically, the quantum processor may comprise multiple atomic state actuators. For example, a first atomic state actuator may output a first wavelength or first set of wavelengths which are different from the wavelength or set of wavelengths outputted by a second atomic state actuator. The atomic state actuator may facilitate the transition between atomic states of a single trapped atom or a plurality of trapped atoms. The wavelengths may be selected based on the atoms in the chamber. The excitation from the ground state to the Rydberg state may be facilitated by two-photon absorption. This may be accomplished using two different EM sources such as lasers or other EM sources. These two EM sources may have different wavelengths. For example, optical control pulses of 495 nm may be used for exciting a Rubidium atom to the Rydberg state and optical control pulses of 795 nm to induce transitions between the hyperfine states.

Suitable signals for trapping and moving the atoms are preferably different, at least in wavelength, to the signals used to manipulate the quantum states of the atoms. In particular, signals for trapping and moving the atoms may be off-resonance, i.e., the wavelength of the optical signals for trapping and positioning an atom cannot excite the atom between its different atomic states.

An example of the general operation of a QPU may include one or more of the following steps:
1) Using the trapping system to generate optical trapping signals to create a plurality of traps in the chamber so that atoms in the chamber are trapped.
2) Optionally using the atom positioner to manipulate, e.g. move, trapped atoms so that each trap of at least a predetermined set of traps can be filled with a single atom. Such set of single atom filled traps may be referred to as a `register', wherein the specific geometrical arrangement of atoms may be referred to a register layout. The detector may be used in this process to help identify which traps are occupied or vacant.
3) Using the state controller to generate predetermined control pulses **1214,** e.g. laser pulses of a predetermined shape, amplitude and duration and use these pulses to control the atomic states of atoms in the register in a predetermined way. These pulses may represent (part of) a quantum algoritm. This step may be performed multiple times to implement processing operations of the QPU, for example, time-sequentially inputting a plurality of optical pulses that represent quantum logic gate operations.
4) Using the detector to detect and image florescent signals emitted by the atoms and using the imaged signals to determine the atomic states of the atoms.

These steps may represent a quantum computation, i.e. execution of (part of) an quantum algortim by the atom-based QPU. The quantum processor may be reset by removing the traps and re-initialised it for a further quantum computation by repeating steps 1-4 above.

**Fig. 13A-13D** illulstrate quantum levels of a neutral atom which can be controlled using pulses. In particular, **Fig. 13A-13C** schematically show three levels of the atomic system of the rubidium atoms wherein the energy levels '*g*' and '*h*' denote the hyperfine states that represent the |0〉 and |1〉 qubit states respectively, whilst '*R*' represents the Rydberg state of the atomic system and is associated with quantum state |*r*〉. The label of '*π*' in **Fig. 13A** and **13B** is shown when a single transition is made between the *g* and *R* state indicating that a *π* phase change has been imparted into the atomic system because of the overall transition.

When a laser field of sufficient duration and amplitude has been imparted onto the atom to resonantly transition it from the *g* energy level up to the *R* energy level and then back to the *g* energy level (within the same control field input), this is labelled as '2*π*' indicating that a 2*π* phase change has been imparted into the atomic system because of the overall transition. The laser fields that give rise to these *π* and 2*π* transitions may be respectively referred to as a *π*-pulse and a 2*π*-pulse. It is understood that the input control fields causing these transitions have a wavelength which is resonant with the |0〉 to |*r*〉 transition and not resonant between the |0〉 and |1〉 transition. **Fig. 13A** shows the atomic transition from the *g* level to the *R* level with a *π-*pulse. **Fig. 13B** shows the atomic transition from the *R* level to the *g* level with a *π-*pulse. **Fig. 13C** shows the atomic transition from the *g* level to the *R* level and back to the *g* level again with a 2*π-*pulse.

**Fig. 13D** depicts a near-resonant laser pulse of amplitude Ω exposing an atom. The frequency of the laser pulse is detuned from the transition frequency between the ground state |*g*〉 and a Rydberg state |*r*〉 by a small (with respect to the transition frequency) detuning *δ.* The amplitude Ω of the pumping laser may determine the transverse-field term in an Ising model, and the detuning to resonance δ induces a longitudinal-field term. Additionally, a global phase of the laser can be tuned in order to control the axis of rotation on the Bloch sphere induced by the transverse-field term. The pulse depicted in **Fig. 13D** represents a single gate operation defining a predetermined rotation over the Block sphere.

**Fig. 14** shows an example of pulses that are used to control neutral-atom based qubits. Pulse sequence **1402₁** depicts a laser signal of a certain amplitude Ω and detuing *δ* for driving the transition between the hyperfine ground states of a single atom. Pulse sequence **1402₂** depicts a laser signal of a certain amplitude Ω and detuing *δ* for driving the transition between the ground and Rydberg states of the entire register. Pulse sequence **1402₃** depicts a laser signal of a certain amplitude Ω and detuing *δ* for driving the transition between the ground and Rydberg states of a single atom. Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method for processing quantum jobs by a hybrid computing system comprising a classical computer system and one or more atomic qubit-based quantum processing units (QPUs), the method comprising:
receiving or determining one or more batches of quantum jobs by the classical computer system, each quantum job being associated with register layout information defining a layout of a quantum register for execution of the quantum job, each batch being associated with trap layout information defining a layout of an electromagnetic trap for trapping atomic qubits, the trap layout of a batch being defined such that register layouts associated with jobs of the batch can be mapped onto the trap layout;
selecting a batch of quantum jobs from the one or more batches of quantum jobs and configuring a first trap for a first QPU of the one or more QPUs based on trap layout information associated with the selected batch; and,
executing the selected batch of quantum jobs using the first QPU.

2. Method according to claim 1 wherein the register layout information includes register coordinates defining the positions of atomic qubits of a quantum register in a QPU and/or wherein the trap layout information comprises trap coordinates defining the positions of traps of an electro-magnetic trap structure in a QPU for trapping atomic qubits.

3. method according to claims 1 or 2 wherein determining one or more sets of quantum jobs includes:
receiving a plurality of quantum jobs; and,
determining the one or more batches of quantum jobs and trap layout information for each the one or more batches based on the register layout information of each of the plurality of quantum jobs.

4. Method according to any of claims 1-3 wherein each quantum job of the selected batch of quantum jobs has the same quantum register layout, preferably the register coordinates defining the positions of atomic qubits of a quantum register of the selected batch of quantum jobs matching the trap coordinates defining the positions of traps of an electro-magnetic trap structure.

5. Method according to any of claims 1-3 wherein each quantum job of the selected batch of quantum jobs has a layout that can be mapped on part of the layout of the trap layout, preferably the register coordinates defining the positions of atomic qubits of a quantum register of the selected batch of quantum jobs matching a subset of the trap coordinates defining the positions of traps of an electro-magnetic trap structure.

6. Method according to any of claims 1-3 wherein a first quantum job of the selected batch of quantum jobs has a register layout that can be mapped on part of the layout of a second quantum job of the selected batch, preferably the register coordinates defining the positions of atomic qubits of a quantum register of the selected quantum job forming a subset of the register coordinates defining the positions of atomic qubits of a quantum register of the second quantum job

7. Method according to any of claims 1-6 wherein the classical computer system receives or determines a plurality of batches of quantum jobs, the method further including:
selecting a second batch of quantum jobs from the plurality of batches of quantum jobs and configuring a second trap for a second QPU of the one or more QPUs based on trap layout information associated with the second batch.

8. Method according to any of claims 1-6 wherein the classical computer system receives or determines a plurality of batches of quantum jobs, the method further including:
receiving or determining similarity metrics between the layout of the first trap and the layout of further traps associated with further batches from the plurality of batches, the similarity metric being indicative of the similarity between two trap layouts;
executing at least part of the batches on the first QPU based on the similarity metrics, preferably executing of the at least part of the batches on the first QPU in an order determined based on the similarity metrics.

9. Method according to claim 8, wherein executing at least part of the batches on the first QPU comprises:
selecting a further batch from the plurality of batches based on the similarity metrics and configuring the first trap based on the trap layout information of the further selected batch; and,
executing the further selected batch of quantum jobs using the first QPU.

10. Method according to any of claims 1-9 wherein a quantum job is associated with information for executing a quantum algorithm on a quantum register, preferably the information including operations representing execution of the quantum algorithm, for example, qubit operations defining a quantum circuit; qubit operations defining a quantum annealing or analog computing algorithm and/or a sequence of pulses to be applied to atomic qubits of the quantum register; wherein the atomic qubit-based quantum processing units (QPUs) are neural atom based QPUs; and/or, wherein the electromagnetic trap is an optical trap generated by an optical system including one or more spatial light modulators.

11. Method according to any of claims 1-10 wherein the hybrid computing system is a network-based computing system, preferably the classical computer system including a network-based classical server system or cloud system configured to communicate with one or more client devices.

12. A hybrid computing system, preferably a network-based hybrid computing system, for processing quantum jobs comprising
a classical computer system, preferably a classical network-based server system or a cloud system, and one or more atomic qubit-based quantum processing units (QPUs) connected to the classical computer system, wherein hybrid computing system is configured to perform the steps of:
receiving or determining one or more batches of quantum jobs by the classical computer system, each quantum job being associated with register layout information defining a layout of a quantum register for execution of the quantum job, each batch being associated with trap layout information defining a layout of an electromagnetic trap for trapping atomic qubits, the trap layout of a batch being defined such that register layouts associated with jobs of the batch can be mapped onto the trap layout;
selecting a batch of quantum jobs from the one or more batches of quantum jobs and configuring a first trap for a first QPU of the one or more QPUs based on trap layout information associated with the selected batch; and,
executing the selected batch of quantum jobs using the first QPU.

13. A hybrid computing system according to claim 12, wherein the hybrid computing system is further configured to perform any of the steps according to claims 2-12.

14. A client device configured to communicate with a hybrid computing system for processing quantum jobs, preferably a hybrid computing system according to claims 12 or 13, the hybrid computing system comprising a classical computer system and one or more atomic qubit-based quantum processing units (QPUs), wherein the client device is configured to:
receiving a plurality of quantum jobs, e.g. via a user interface, each quantum job being associated with register layout information defining a layout of a quantum register for one of the one or more QPUs for execution of the quantum job;
determining one or more batches of quantum jobs and trap layout information for each the one or more batches based on the register layout information of each of the plurality of quantum jobs, trap layout information defining a layout of an electromagnetic trap for trapping atomic qubits, the trap layout of a batch being defined such that register layouts associated with jobs of the batch can be mapped onto the trap layout; and,
transmitting the one or more batches and the associated trap layout information to the hybrid computing system for processing the one or more batches based on the trap layout information.

15. A client device according to claim 14, wherein if a plurality of batches are determined based on the plurality of quantum jobs, the client device is further configured to:
selecting a first batch associated with a first trap layout from the plurality of batches and determining similarity metrics between the layout of the first trap and the layout of further traps associated with further batches from the plurality of batches, the similarity metric being indicative of the similarity between two trap layouts; and, optionally, determining an order of execution of the plurality of batches.
transmitting the similarity metrics and/or the order of execution of the plurality of batches to the hybrid computing system for processing the one or more batches based.

16. A computer program or suite of computer programs comprising at least one software code portion, the software code portion, when run on a hybrid computing system comprising a classical computer system and one or more atomic qubit-based quantum processing units (QPUs), being configured for executing the method steps according to any of claims 1-11.
